# EUROPEAN PATENT APPLICATION

(11) **EP 4 481 350 A1**
(43) Date of publication of application: **25.12.2024**
(21) Application number: 23382615.5
(22) Date of filing: 20.06.2023
(51) Int. Cl.: G01L 9/00, D06F 1/00, D06F 37/00, D06F 39/00

(54) **ELECTRICAL APPLIANCE**

(71) Applicant: E.G.O. Elektro-Gerätebau GmbH, 75038 Oberderdingen (DE)
(72) Inventor: Mañan Canyelles, Jose, 08110 Montcada i Reixach (ES); Capellà Prieto, Esther, 08185 Llicà de Vall (ES); Gaya Saura, Franc, 08030 Barcelona (ES)
(74) Representative: Patentanwälte Ruff, Wilhelm, Beier, Dauster & Partner mbB

(57) **Abstract**

A washing machine comprises a drum for laundry in a tub, a pressure measuring device for measuring a pressure difference due to a varying water level in the tub, and a hose conduit from the treatment chamber to the pressure measuring device. The pressure measuring device comprises a pressure measuring chamber with variable volume, said variable volume being caused through a flexible chamber wall, a carrier for the pressure measuring chamber, a movable part on the flexible chamber wall, a spring means between the movable part and the carrier to push the movable part together with the flexible chamber wall away from the carrier, and measuring means adapted to determine a distance between the movable part and the carrier or to determine a change in this distance. The measuring means are designed for an optical measurement or a capacitive measurement.

## Description

### FIELD OF APPLICATION AND PRIOR ART

The invention is directed to an electrical appliance, in particular a washing machine, wherein the electrical appliance has a treatment chamber for objects and a pressure measuring device for measuring a pressure difference. This may in the case of a washing machine preferably be a pressure difference due to a varying water level in the treatment chamber, which varying water level may also be in a hose conduit from the treatment chamber to the pressure measuring device.

### OBJECT AND SOLUTION

It is an object of the invention to an electrical appliance, with which problems of the prior art can be solved, and in particular to provide an electrical appliance allows for a secure and reliable measurement of a pressure difference and a water level in the treatment chamber.

This problem is solved by an electrical appliance having the features of claim 1. Advantageous and preferred embodiments of the invention are the subject-matter of the further claims and will be explained in more detail below. The wording of the claims is incorporated into the description by express reference.

The electrical appliance of the invention, which preferably may be a washing machine or a washer-dryer, comprises a treatment chamber for objects, such as a drum with laundry in it, and a pressure measuring device for measuring a pressure difference. This is preferably a pressure difference due to a varying water level in the treatment chamber. Also, a conduit is provided, which preferably may be a hose conduit, from the treatment chamber to the pressure measuring device. The conduit is somehow provided to bring the pressure or any pressure difference, respectively, from the treatment chamber to the pressure measuring device. This pressure measuring device comprises a on the flexible chamber wall, with a volume being variable, wherein said variable volume is caused through an at least partially flexible chamber wall of the device. In preferred manner, the pressure measuring chamber is arranged at some distance from a carrier of the device. The carrier may be a PCB, on which further components are provided, preferably control elements for the pressure measuring device or an appliance control for the complete appliance. The carrier mainly serves to support or to carry the pressure measuring chamber. On the flexible chamber wall, a movable part is provided, for example without permanent fixing such as gluing or the like. A spring means is provided between the movable part and the carrier, said spring means being adapted to push the movable part together with the flexible chamber wall away from the carrier. This may at the same time serve to minimize the volume of the pressure measuring chamber, such that any rising pressure in the treatment chamber results in enlarging the pressure measuring chamber. This again moves the flexible chamber wall towards the carrier, which distance of movement corresponds to the pressure difference. Measuring means are provided in the device, preferably on the carrier, being adapted to determine a distance between the movable part and the carrier or to determine a change in distance between the movable part and the carrier. The characteristic of the invention is that the measuring means are designed for an optical measurement or a capacitive measurement, such that they measure or determine the distance between the movable part and the carrier or its change in distance. Such an optical measurement or capacitive measurement has the advantage that it can be very accurate and very fast, in particular with no hysteresis or time delay.

The carrier may be a printed circuit board, preferably a convention PCB from resin. Electrical circuit components are preferably arranged on this printed circuit board, for example for an operating device or controller of the electrical appliance. This may in particular be the sole operating device of the electrical appliance or appliance controller.

In an embodiment of the invention, the electrical circuit components may comprise at least one element being selected from the following group: Operating element, touch switch, mechanical switch, display, lighting element. Such elements are basically known in the art. In preferred manner, the carrier with these elements and the appliance controller may be provided on a front side or top side of the electrical appliance where usually such operating elements together with a display are arranged. The combination of the PCB for the appliance controller with the pressure measuring device results in that other switches for measuring such a pressure difference can be dispensed of. This reduces manufacturing effort and the number of necessary parts.

In a preferred embodiment, the electrical circuit components mentioned above can be arranged on the other side of the carrier than the pressure measuring device or the measuring means, respectively. Such two-sided PCB's are widely known and easily used.

In one possible embodiment, the measuring means are designed as optical measuring means for an optical measurement. They comprise a light source for this optical measurement, which in particular is an LED, preferably an IR LED. They also comprise a light receiver, which in particular is an optocoupler, a photocell or a phototransistor. In preferred manner, the light source and the light receiver are arranged on the carrier. The light receiver may be designed either to only detect receiving light, or alternatively may be designed to detect an incidence angle of the light sent out from the light source.

In another possible embodiment, the optical measuring means are designed to use reflected light, such as a reflex light barrier, or are designed to measure light reflection. The light source and the light receiver are in particular arranged on the carrier, preferably next to one another. They may even be realized in a combined component. A reflector for reflecting the light is arranged on the movable part, which reflector reflects light emitted by the light source back in the direction to the light receiver. In the light receiver, the received light is analysed, and the distance is determined therefrom.

In yet another possible embodiment, the optical measuring means are designed to operate by means of angle detection, preferably by evaluating an efficiency or a light path of the light transmission relative to a reflection angle between the light source and the light receiver. The light receiver may in particular be designed to detect the angle of incidence of light onto it. Also, such methods are known in the art for common purposes, preferably also for distance measurement.

In an alternative embodiment of the invention, the measuring means are designed for a capacitive measurement of the distance. This may preferably be made by means of two capacitor plates lying opposite one another, and their distance changes with a change in the pressure difference. A first capacitor plate may be arranged on the carrier itself, and is fixed in its location. A second capacitor plate may then be arranged on the chamber wall or on the movable part, respectively, and thus is movable in its location or position.

Preferably, the first capacitor plate is formed on the carrier as an electrically conductive coating, in particular as an electrically conductive coating corresponding to further conductor tracks, contact fields or the like on the carrier with respect to material and production process as an electrically conductive coating. In preferred manner, they are made of copper, in particular in case of a PCB as carrier.

The second capacitor plate may in one alternative be formed as an electrically conductive part which either forms the movable part or which is latched, clamped or glued to the movable part. This part may in particular be flat. The second capacitor plate may preferably consist of electrically conductive material, even more preferably as one metal part or plate, respectively. In this alternative, the second capacitor plate is electrically and/or galvanically isolated from the carrier or any circuit thereon.

In another alternative, the second capacitor plate can be electrically and galvanically conductively connected to the carrier, in particular to a contact field on the carrier. This serves to integrate the second capacitor plate into a circuit on the carrier for measuring the pressure difference. Such a connection may preferably be by means of the spring means, which then are electrically conductive, in particular consist of metal. The spring then electrically contacts both the second capacitor plate and the contact field on the carrier. Other options are a free and flexible cable or the like.

The spring means should preferably have a linear spring characteristic, for the reason to generate and provide a linear counter-force to the expansion of the pressure measuring chamber. The spring means should preferably be made of metal, for example as a helical metal spring. This will be explained later with regard to the drawings.

The spring may be supported on the one hand against the carrier and on the other hand against the flexible chamber wall and against the movable part, respectively. This helps to define the movement of the movable part.

A chamber receptacle can be provided or fastened on the carrier, which in particular may be formed as a structural unit or a separate part. The pressure measuring chamber can then be arranged on or fixed to this chamber receptacle. The chamber receptacle may preferably be formed in two parts or exactly two parts from two separate parts. A first part may be a fastening part, which is arranged or fastened on the carrier. The second part may be a chamber part, which is fastened on the first fastening part, thus forming the whole chamber receptacle.

The chamber part may have a recessed or pot-like design, and/or form a part of the pressure measuring chamber. Preferably, the remaining part of the pressure measuring chamber may be formed by the flexible chamber wall, which preferably may be a membrane. This flexible chamber wall can be fastened in a sealed manner to the chamber part, preferably glue-less and only by a clamping fixture or the like. For this purpose, the flexible chamber wall can in particular be fixed in an outer edge region to the chamber part. Preferably, this can be a clamping by means of the fastening part in such a way that the outer edge region of the flexible chamber wall is clamped between the chamber part and the fastening part in a continuous circumferential manner. This will seal the flexible chamber wall to the chamber part, thus forming the pressure measuring chamber, which is sealed against the environment, and the only access is via a pipe socket or the like, being connected to the conduit from the treatment chamber. Such a connection for the conduit or the hose conduit from the treatment chamber may be formed on the chamber part, in particular in projection above the chamber wall. The connection may be formed in one part with the chamber part. It may preferably be formed as a protruding pipe socket, to which the conduit or the hose conduit may be connected in sealed manner easily.

The fastening part and the chamber part may be designed and connected to one another in such a way that one part overlaps the other part circumferentially and surrounds it radially on the outside. They need not be fastened in sealed manner, but should be mechanically stable. The chamber part may overlap the fastening part circumferentially and surround it radially on the outside. This helps to fasten the chamber part to the fastening part, and also to unfasten it. Such an unfastening should be possible without destroying either of them, preferably without the need of any tools.

These and further features are evident not only from the claims but also from the description and the drawings, the individual features each being implemented by themselves or in multiples in the form of subcombinations for an embodiment of the invention and in different fields and being able to be advantageous and independent protectable embodiments for which protection is claimed here. The division of the application into individual sections and subheadings does not limit the general validity of the statements made thereunder.

### SHORT DESCRIPTION OF THE DRAWINGS

Embodiments of the invention are shown in the drawings, in which show:
- Fig. 1: a schematic functional view of a washing machine,
- Fig. 2: a schematic view of a tub of the washing machine with a water level and a pressure measuring device,
- Fig. 3: a view onto an operating device of the washing machine of Fig. 1 with a PCB and a PCB holder,
- Fig. 4: a view onto the PCB holder similar to Fig. 3 without the PCB, showing parts of the pressure measuring device,
- Fig. 5: a schematic view onto several parts of a pressure measuring device in an exploded view,
- Fig. 6: the pressure measuring device according to Fig. 5 in an assemble state without any pressure,
- Fig. 7: the pressure measuring device of Fig. 6 with a certain pressure effecting an expansion of the pressure measuring chamber,
- Fig. 8 to 11: various embodiments of measuring means for the pressure measuring device.

### DETAILED DESCRIPTION OF THE EMBODIMENTS

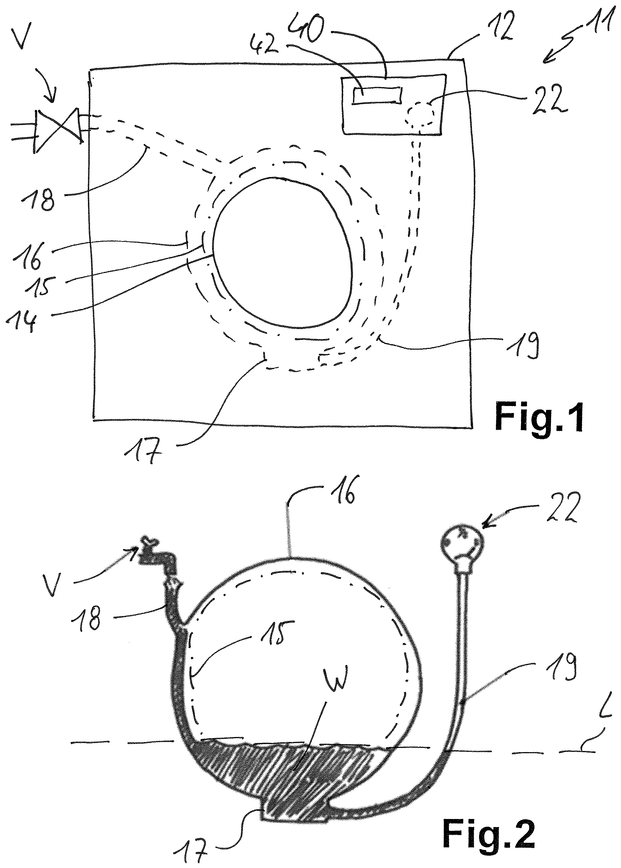

Fig. 1 shows a washing machine 11 according to the invention as an electrical appliance. The washing machine 11 has a conventional housing 12 with an operating device 40 at its front side in the right upper region. On the front side of the housing 12, also a door 14 is provided, behind which a drum 15 for washing laundry is provided, shown in dash-dotted line. The drum 15 is placed in a conventional tub 16 having a tub sump 17 at its lower end.

Fresh water may enter the tub 16 via a tub inlet line 18, preferably controlled by a ball valve V. This water entering the tub 16 may be fresh water from outside or water mixed with detergent or the like from the inside. The tub sump 17 is connected with an outlet line 19, which may be a rigid line or a flexible hose. The outlet line 19 leads upwards at the right side of the tub 16 towards the operating device 40, where a pressure measuring device 22 is provided. The outlet line 19 is connected in fluid conducting manner to this pressure measuring device 22. It can be easily taken from Fig. 2 that water W having entered the tub 16, in this case via the tub inlet line 18, rises in the lower region of the tub 16 up to a water level L. With this water level L, also the lower region of the drum 15 is floated with water W. To achieve this, any outlet from the tub sump 17, preferably to a filter and a following water conduit of the washing machine 11 including a pump and the like, is present but not shown. The tub outlet line 19 is always connected in open manner to the tub sump 17, thus leading to the water W filling up the outlet line 19 also up to the water level L. This is according to the principle of communicating tubes. A diameter of the outlet line 19 can usually be rather small, for example between 5mm and 15mm, preferably such that any capillary effect can be neglected.

It can also be taken from Fig. 2 as the known principle of such a pressure measuring device 22 that the rest of the outlet line 19 above the water level L up to the pressure measuring device 22 is filled with air in such a way that any water level L rising any higher will lead to an increase in the air pressure, which has an effect onto the pressure measuring device 22. This effect is then measured to detect the water level L. This basic measuring principle is known in the art. In practice, water level L may range from very low at the lowest point of the tub sump 17, for example before any water is let into the tub 16, up to a fourth or a third, at the maximum, of the vertical height of the tub 16. A pressure difference of the air pressure in the outlet line 19 effecting on the pressure measuring device 22 may thus vary between 0 mbar and up to 40 or 50 mbar. This is a rather small pressure difference to be measured with simple, cheap and reliable pressure sensors. To measure the water level L in the tub 16 may be useful to determine the water volume in the tub 16 and in the washing machine 11 respectively. This also serves to have better control of any washing process and to minimize water consumption, preferably.

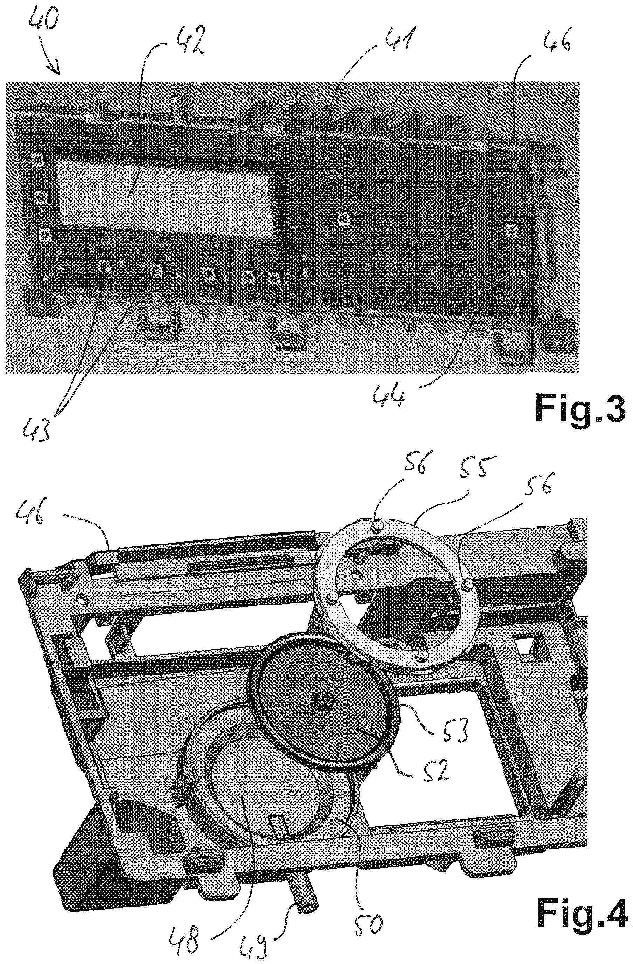

One aim of the invention is to integrate the pressure measuring device into the operating device 40 of the washing machine 11, which operating device 40 is shown in Fig. 3 without any front cover before it, as is regularly provided. The operating device 40 has a conventional PCB 41, on which a plurality of elements is provided. One such element is an LC display 42 to display any user information. Push-button switches 43 are provided cooperating with movable elements in the above-mentioned front cover. A microcontroller 44 is shown in the right lower corner, which microcontroller 44 preferably is designed to operate any function of washing machine 11 including those of the pressure measuring device 22. Shown in Fig. 3 is a front side F of the PCB 41. The pressure measuring device 22 with its functional elements as is shown partly in Fig. 4 is arranged on the backside B of the PCB 41. PCB 41 is held in a PCB holder 46 made of plastic material, for example PP. The PCB holder 46 not only serves to hold the PCB 41 in an exact location inside the washing machine 11 and behind the front cover, but also comprises at least a part of the pressure measuring device 22. A measuring chamber 48 with a depressed shape is formed in the PCB holder 46, from which a short pipe socket 49 protrudes, in practice downwards according to the schematic view of Fig. 2. A cover housing 50 is formed around the measuring chamber 48.

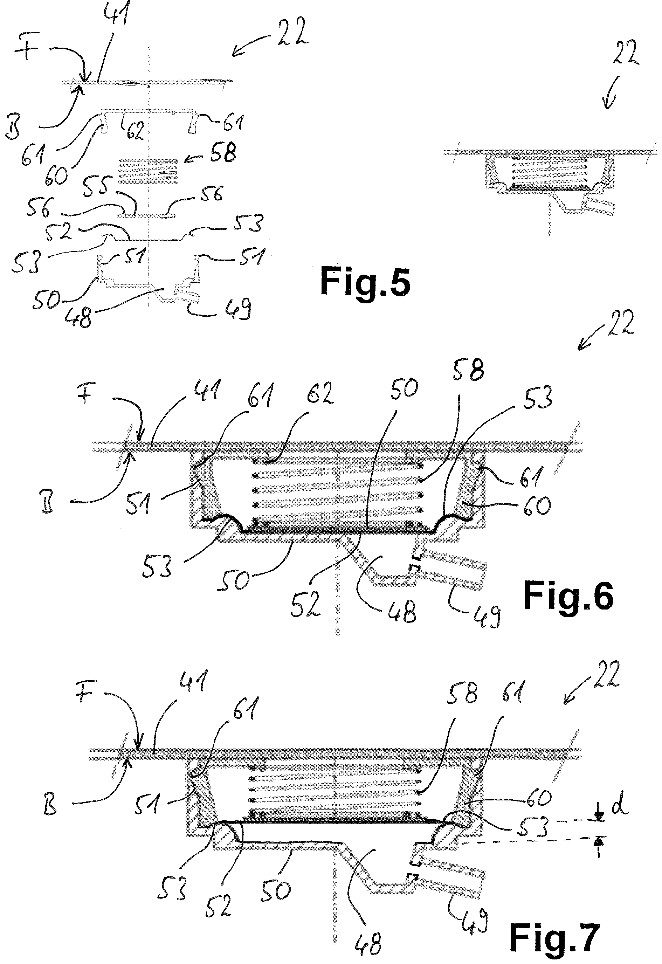

On an outer rim-like part of the cover housing 50, a membrane 52 having an outer rim 53 is placed. This can also be taken from the exploded view of the pressure measuring device 22 from Fig. 5 or, in its assembled state, from Fig. 6. The membrane 52 is held and even pressed against the cover housing 50 by the lower ends of a base housing 60, which is not shown here. This base housing 60 may be a single part which is fixed to the cover housing according to Fig. 5 and 6 by retainer tabs 61 on the base housing 60. These retainer tabs 61 move into retainers 51 of the cover housing 50, such that both parts are firmly connected. Before fixing the base housing 60 to the cover housing 50 a movable part 55, which is shown in Fig. 4 as a ring, but which could also be a disc, is put onto the membrane 52. It has four projections 56 on its upper side, which serve to center a helical spring 58 above it. For centering this helical spring 58 relative to the base housing 60, centering projections 62 are provided on this base housing 60.

The membrane 52 is preferably made from elastic material such as rubber or the like and can be rather thin to be extended upwards and convexly by an increasing pressure inside the measuring chamber 48, as can be taken from the comparison of Fig. 6 and 7. If the pressure in the outlet line 19 rises and causes the measuring chamber 48 to expand, the membrane 52 is pressed upwards, while it is still held firmly along its outer rim 53 between a cover housing 50 and the base housing 60. This vertical movements for a distance d according to Fig. 7 takes place, on the one hand, against the elastic force of the membrane 52 itself. The measuring chamber 48 of course stays airtight during this. As this increase of the volume of the measuring chamber 48 and the vertical movement for the distance d is against the elastic and thus none-linear force of the membrane 52, this poses a problem for an exact measurement. For this reason, the movable part 55 being placed on top of the membrane 52 is carrying the helical spring 58. This helical spring 58 is made of suitable metal and thus has a linear behaviour of force versus distance. If now the elasticity of the membrane 52 is very high, such that its elastic force is rather low or even insignificant in relation to the spring force of the helical spring 58, this linear spring force mainly defines the character of expansion of the measuring chamber 48. As such, the membrane 52 mainly serves to have an airtight measuring chamber 48.

As the distance d corresponds to the air pressure in the outlet line 19 and thus to the water level L in the tub 16, this distance d is to be measured. In Fig. 6, this distance is 0 as the measuring chamber 48 has not expanded at all.

By using the movable part 55 and its positional relative to the PCB 41 or its backside B, respectively, measuring the pressure or a pressure difference in the outlet line 19 can be done by a distance measurement.

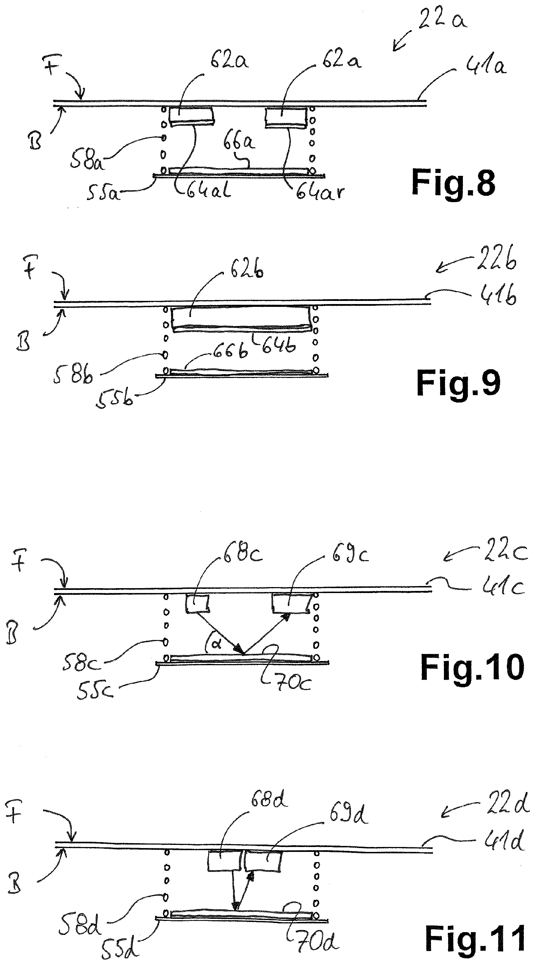

An example for a capacitive distance measurement is shown in Fig. 8 for a pressure measuring device 22a. On the backside B of PCB 41a two centering projections 62a for the helical spring 58a are provided. In this case they are rather large compared to the ones of Fig. 5. On the lower side of the left centering projection 62a, a left capacitor plate 64al is provided. On the lower side of the right centering projection 62a, a right capacitor plate 64ar is provided. These capacitor plates 64al and 64ar are connected in electrically conductive manner to the PCB 41a and to the microcontroller 44, respectively.

On the upper side of the movable part 55a, a metal plate 66 is provided, for example made from copper or stainless steel. It is not electrically connected in any manner to the PCB 41a or to any circuit on it, but can influence a capacity between the left capacitor plate 64al and the right capacitor plate 64ar or the capacity formed by these, respectively. The closer the metal plate 66a is coming to this capacitor, the larger its influence is. This can be measured by capacity measurement in the microcontroller 44, thus being able to exactly measure or determine any change to the distance d and thus any change in the air pressure in the outlet line 19. Depending on the geometry of the components, the capacitor plates 64al and 64ar could also be provided directly on the backside B of the PCB 41a, for example as fields of copper.

An alternative embodiment of a pressure measuring device 22b is shown in Fig. 9. Either on the underside of one single large centering projection 62b or, alternatively, also on the backside B of the PCB 41b, one single capacitor plate 64b is provided. It is electrically connected to the PCB 41b and to the microcontroller 44.

On the upper side of the movable part 55b a metal plate 66b is provided having about the same size as the capacitor plate 64. In this case, the metal plate 66b is also electrically connected to the PCB 41b and to the microcontroller 44, either by a separate electrical connection or via the metallic helical spring 58b. The capacitor plate 64 and the metal plate 66b form a capacitor with parallel and juxtaposed plates. Its capacity changes with the distance between them, which also allows for a distance measurement to determine any change in the air pressure and thus of the water level L in the outlet line 19.

An optical method for such a distance measurement is shown in Fig. 10. On the backside B of the PCB 41c, a light source 68c is provided. With some distance on the right side of it, a light receiver 69c is provided on the backside B. The light source 68c simple sends out light, preferable in rather directed manner. On the upper side of the movable part 55c, a reflecting plate 70c is provided, preferably being made of metal or of shining and reflective material, respectively. The light receiver 69 is designed in such a way to measure an angle of any light being reflected onto it and thus to determine the angle α of the light reflection. It is easily to be seen that the closer the movable part 55c comes to the PCB 41c, the smaller this angle α becomes. This also allows for a distance measurement by using the angle α and thus determining the distance and its change, respectively.

Yet another possibility for such a distance measurement is shown in Fig. 11. On the backside B of the PCB 41d, a light source 68d and a light receiver 69d are arranged very close to each other.

The light source 68d sends out a beam of light, which is reflected again by a reflecting plate 70d arranged on the upper side of the movable part 55d. The light receiver 69d receives the reflected light. The light source 68d and the light receiver 69d together with the microcontroller 44 are designed such that they can make a TOF (time of flight) measurement. This means that the time is measured for light to be sent out by the light source 68d until it is received at the light receiver 69d. Such a TOF measurement and TOF measuring devices are known in the art for the skilled person, such that they need not be described in more detail. This allows for a rather exact distance measurement.

Of course, any further options for a capacitive or optical measurement of the distance resulting from an expansion of the measuring chamber 48 are known to the skilled person. They need not be described in further detail to understand them.

## Claims

1. Electrical appliance comprising a treatment chamber for objects, a pressure measuring device for measuring a pressure difference, and a conduit from the treatment chamber to the pressure measuring device, the pressure measuring device comprising:
- a pressure measuring chamber with variable volume, said variable volume being caused through an at least partially flexible chamber wall,
- a carrier for the pressure measuring chamber,
- a movable part on the flexible chamber wall,
- a spring means between the movable part and the carrier, said spring means being adapted to push the movable part together with the flexible chamber wall away from the carrier,
- measuring means adapted to determine a distance between the movable part and the carrier or to determine a change in distance between the movable part and the carrier,
wherein the measuring means are designed for an optical measurement or a capacitive measurement.

2. Electrical appliance according to claim 1, **characterized in that** the carrier is a printed circuit board, electrical circuit components preferably being arranged on the printed circuit board for an operating device of the electrical appliance, in particular as the sole operating device of the electrical appliance.

3. Electrical appliance according to claim 2, **characterized in that** the electrical circuit components comprise at least one element selected from the following group: Operating element, touch switch, mechanical switch, display, lighting element.

4. Electrical appliance according to claim 2 or 3, **characterized in that** the electrical circuit components are arranged on the other side of the carrier than the pressure measuring device or the measuring means, respectively.

5. Electrical appliance according to one of the preceding claims, **characterized in that** the measuring means are designed as optical measuring means for and comprise an optical measurement by means of a light source, in particular an LED, preferably an IR LED, and a light receiver, in particular an optocoupler, a photocell or a phototransistor, preferably the light source and the light receiver being arranged on the carrier.

6. Electrical appliance according to claim 5, **characterized in that** the optical measuring means are designed as a reflex light barrier or are designed to measure light reflection, preferably the light source and the light receiver being arranged next to one another on the carrier, a reflector being arranged on the movable part, which reflector reflects light emitted by the light source back in the direction of the light receiver.

7. Electrical appliance according to claim 5, **characterized in that** the optical measuring means are designed to operate by means of angle detection, preferably by evaluating an efficiency or a light path of the light transmission relative to a reflection angle between the light source and the light receiver, in particular the light receiver being designed to detect the angle of incidence of light.

8. Electrical appliance according to one of claims 1 to 4, **characterized in that** the measuring means are designed for capacitive measurement, preferably by means of two capacitor plates lying opposite one another, in particular a first capacitor plate being arranged on the carrier and a second capacitor plate being arranged on the chamber wall.

9. Electrical appliance according to claim 8, **characterized in that** the first capacitor plate is formed on the carrier as an electrically conductive coating, in particular as an electrically conductive coating corresponding to further conductor tracks, contact fields or the like with respect to material and production process as an electrically conductive coating, preferably being made of copper.

10. Electrical appliance according to claim 8 or 9, **characterized in that** the second capacitor plate is formed as a flat electrically conductive part which either forms the movable part or which is latched, clamped or glued to the movable part, wherein in particular the second capacitor plate consists of electrically conductive material.

11. Electrical appliance according to claim 10, **characterized in that** the second capacitor plate is electrically conductively connected to a contact field on the carrier, preferably by means of the spring means, which is electrically conductive, in particular consists of metal, and electrically contacts both the second capacitor plate and the contact field on the carrier.

12. Electrical appliance according to any one of the preceding claims, **characterized in that** the spring means has a linear spring characteristic, preferably the spring means being made of metal.

13. Electrical appliance according to one of the preceding claims, **characterized in that** the spring means is a helical spring which is supported on the one hand against the carrier and on the other hand against the flexible chamber wall and against the movable part, respectively.

14. Electrical appliance according to one of the preceding claims, **characterized in that** a chamber receptacle is provided on the carrier, in particular as a structural unit, the pressure measuring chamber being arranged on the chamber receptacle, the chamber receptacle preferably being formed in two parts from two separate parts with a first part as a fastening part, which is arranged on the carrier, and a second part as a chamber part, which is fastened on the first fastening part.

15. Electrical appliance according to claim 14, **characterized in that** the chamber part is of recessed or pot-like design and/or forms part of the pressure measuring chamber, preferably the remaining part of the pressure measuring chamber being formed by the flexible chamber wall which is fastened in a sealed manner to the chamber part, for which purpose, in particular, the flexible chamber wall is fixed in an outer edge region to the chamber part by clamping, preferably by clamping by means of the fastening part in such a way that the outer edge region of the chamber wall is clamped between the chamber part and the fastening part in a continuous circumferential manner.

16. Electrical appliance according to claim 15, **characterized in that** the fastening part and the chamber part are designed and connected to one another in such a way that one part overlaps the other part circumferentially and surrounds it radially on the outside, preferably the chamber part overlapping the fastening part circumferentially and surrounding it radially on the outside.

17. Electrical appliance according to claim 15 or 16, **characterized in that** a connection for the conduit or hose conduit from the treatment chamber is formed on the chamber part, in particular in projection above the chamber wall, preferably as a protruding pipe socket.
